# EUROPEAN PATENT APPLICATION

(11) **EP 3 950 542 A1**
(43) Date of publication of application: **09.02.2022**
(21) Application number: 21188009.1
(22) Date of filing: 27.07.2021
(51) Int. Cl.: B65G 17/06

(54) **PROTECTIVE DEVICE AND CORRESPONDING VEHICLE**

(30) Priority: 03.08.2020 IT 202000019069
(71) Applicant: P.E.I. Protezioni Elaborazioni Industriali S.r.l., 40012 Calderara di Reno (Bologna) (IT)
(72) Inventor: BENEDETTI, Michele, 40133 Casalecchio di Reno (Bologna) (IT); MARDEGAN, Vittorio, 26037 SAN GIOVANNI IN CROCE (CREMONA) (IT)
(74) Representative: Milli, Simone

(57) **Abstract**

Described is a device (1) for protecting the space between carriages (2, 3) of an articulated vehicle, comprising a plurality of covering elements (10, 12, 14) each having a first wall (100, 120, 140) and a second wall (102, 122, 142), wherein said first walls (100, 120, 140) are superposed on each other to form a sloping cover, the plurality of covering elements (10, 12, 14) comprise a first (12) and a second (14) end covering element connected to the carriages (2, 3) of the articulated vehicle and wherein of each of said covering elements (10, 12, 14) comprises at least one flap (104, 124, 144) configured for a coupling with a corresponding flap (104, 124, 144) of an adjacent covering element (10, 12, 14).

## Description

This invention relates to a device for protecting a space between adjacent carriages of an articulated vehicle, for example a carriage of the "sorter" type configured for sorting articles.

The prior art sorter carriages allow the positioning of the articles, boxes and packs, to be transported only on the carriages, whilst the space between adjacent carriages is not configured to allow the support of articles, especially in the case of particularly heavy articles.

The sorter carriages move on curvilinear paths, along upwards and downwards inclines. An article may accidentally fall or move occurs towards the intermediate space between carriages, the coupling device may be damaged and/or may break. In effect, the prior art devices comprise traditional bellows which are not able to support the weight of the articles.

The aim of the invention is therefore to provide a device for protecting the space between adjacent carriages which facilitates overcoming the above-mentioned drawbacks, for example which is able to support the weight of an article, for example even of 50 kg.

A further aim of the invention is to achieve the above-mentioned aim by using covering elements, described in more detail below, which have one or more advantages compared with a traditional bellows, for example easier and faster production time and/or a lower cost. The protective device according to the invention allows a greater modularity compared with a traditional bellows, therefore allowing a length of the protective device to be adapted to the desired application.

According to the invention, the aims is achieved by a protection device according to the invention comprising the technical features described in one or more of the appended claims.

The technical features of the disclosure, with reference to the above aims, are clearly described in the claims below and its advantages are apparent from the detailed description which follows, with reference to the accompanying drawings which illustrate a preferred, non-limiting example embodiment, and in which:
- Figures 1 and 2 are, respectively, a top view and a side view of a protective device according to one or more embodiments,
- Figure 3 illustrates a detail of Figure 2,
- Figures 4 and 5 show a non-limiting example of covering elements according to one or more embodiments,
- Figure 6 is a bottom view of a protective device according to one or more embodiments,
- Figures 7, 8 and 9 are, respectively, a bottom, a side view and a perspective view of a protective device according to one or more embodiments, and
- Figure 10 illustrates a detail of a protective device according to one or more embodiments.

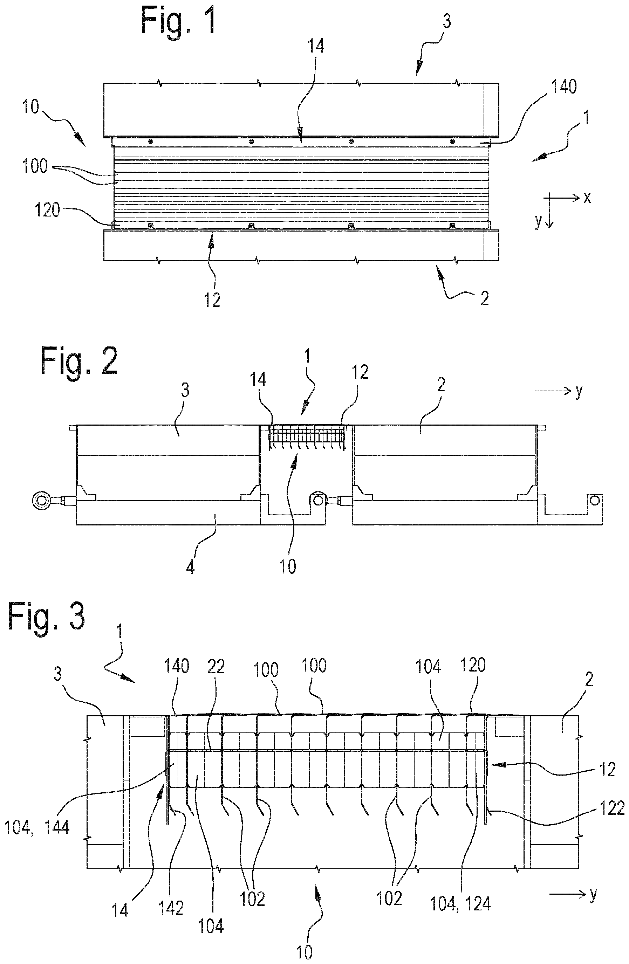

Figures 1 to 3 illustrate a protective device 1, according to one or more embodiments, installed at a space between a first carriage 2 and a second carriage 3 of an articulated vehicle (not illustrated in the drawings). As illustrated for example in Figure 2, the carriages 2, 3 may be coupled by means of a coupling device 4 and the space between the carriages 2, 3 is protected by the protective device 1.

The device 1 for protecting the space between carriages 2, 3 comprises a plurality of covering elements 10, 12, 14, each having a first wall 100, 120, 140 and a second wall 102, 122, 142, which respectively define the short side and the long side of an L. The covering elements may comprise slats, for example made of metal. The covering elements 10, 12, 14 may be elastically flexible and/or harmonic.

The first wall 100, 120, 140 of each covering element 10, 12, 14 may be connected, for example directly, to the second wall 102, 122, 142 of the covering element 10, 12, 14 at respective ends. The first wall 100, 120, 140 may be positioned substantially horizontally, for example it may be parallel to a supporting surface for the articles to be conveyed. The second wall 102, 122, 142 may be positioned substantially vertically, for example perpendicular to the supporting surface of the articles to be conveyed. For example, the covering element 10, 12, 14 may be substantially L-shaped, with the first and second walls which can correspond to the long side and the short side of the L, or vice versa, depending on the dimensions of the carriages 2, 3 and/or as a function of a distance between the carriages 2, 3. The first walls 100, 120, 140 overlap each other to define a cover with sloping sections. In other words, the first walls 100, 120, 140 of the covering elements are configured to be superposed to form a ladder, with the first wall of each covering element which is positioned above the first wall of the next adjacent covering element in the ladder and under the first wall of the adjacent previous covering element in the ladder. In this way, the space between carriages is protected continuously by the first walls of the covering elements. The first walls are substantially flat, for example to allow a substantially flat surface to be made in the space between the carriages 2, 3.

According to one aspect, the plurality of covering elements 10, 12, 14 comprises central covering elements 10, a first end covering element 12 and a second end covering element 14.

The first end covering element 12 and the second end covering element 14 are connected, for example directly, to an adjacent central covering element 10 and respectively to the first carriage 2 and to the second carriage 3 of the articulated vehicle. For example, the end covering elements 12, 14 can be completely fixed to the respective carriages 2, 3, such that a relative movement between the carriage 2, 3 and the respective end covering element 12, 14 does not occur. In other words, the end covering elements 12, 14 and the respective carriages 2, 3 connected to them can move in an integral fashion.

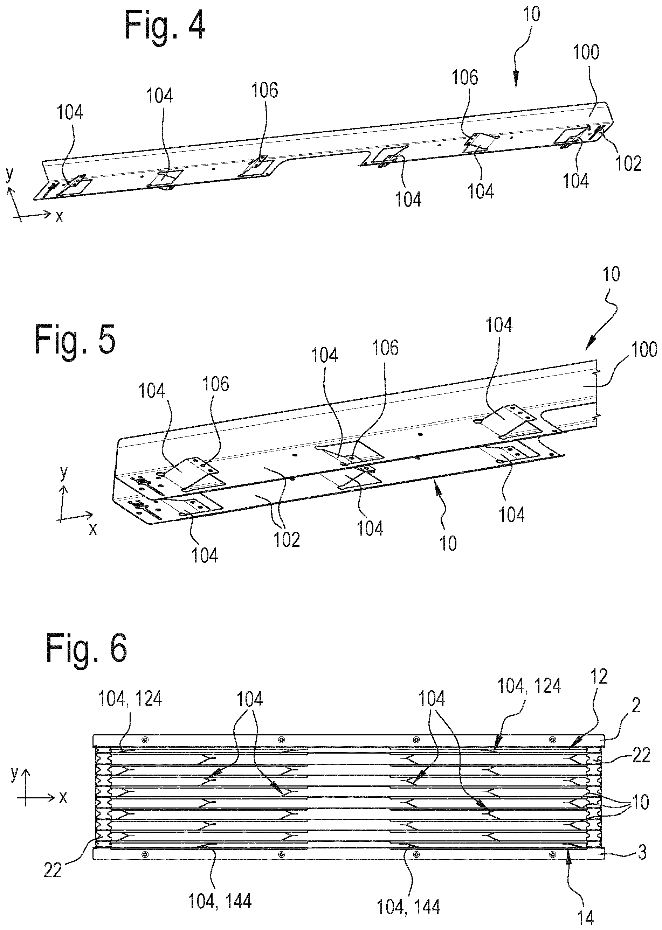

The central covering elements 10 are connected, for example directly, to adjacent covering elements, for example central 10 and/or end 12, 14. According to one aspect, the plurality of covering elements 10, 12, 14 comprises at least one flaps 104, 124, 144, illustrated in the non-limiting example of Figure 4, which shows a central covering element 10. The flap 104, 124, 144 is configured for coupling with a corresponding flaps 104, 124, 144 of an adjacent covering element 10, 12, 14, as may be seen in Figure 5, which shows a coupling between central covering elements 10. For simplicity and ease of understanding, the description of Figures 4 and 5 refers to a central covering element 10, however the same features are apparent in the end covering elements 12, 14. For example, the end covering elements 12, 14 are configured to be coupled to a single adjacent central covering element 10. For this reason, a number of flaps 124, 144 in the end covering elements 12, 14 may be less than the number of flaps 104 in the central covering elements 10. Alternatively, the central covering elements 10 and the end covering elements 12, 14 may be the same and only some flaps 124, 144 present in the end covering elements 12, 14 can be used for connection to an adjacent central covering element 10.

As illustrated for example in Figures 4 and 5, the one or more flaps 104 are located at the second wall 102 of the covering element 10. The flaps 104 may be made from the second wall 102, for example the second wall 102 may be cut to form an at least partial profile of the flaps 104; the cut portion can form failure lines which can be used to form the flaps 104. In other words, three sides of the flaps 104 can be cut from the second wall 102 and a fourth side of the flap 104 remains connected to the second wall. Alternatively, the flaps 104 may be fixed on the second wall 102. According to one aspect, the flaps 104 may be at least partly or completely flexible. In this way, the flaps allow a relative movement of the covering elements towards or away from each other.

In other words, said flaps 104 are configured to deform elastically during the relative movement, towards or away from, of the L-shaped covering elements (thereby adopting a plurality of positions between a compressed end position and a pulled out position).

The flaps 104, 124, 144 may be configured to join adjacent covering elements 10, 12, 14 to each other and to support the adjacent covering elements 10, 12, 14. For example, thanks to the connection by the flaps 104, 124, 144, a movement of the covering elements 10, 12, 14 is constrained to the movement of the adjacent covering elements 10, 12, 14. In other words, the flaps 104, 124, 144 allow the pulling of the adjacent covering elements 10, 12, 14.

The protective device 1 is configured to move and adapt its width (along a direction of travel of the articulated vehicle). For example, the device can move between a contracted position, wherein the second walls 102, 122, 142 of adjacent covering elements 10, 12, 14 are spaced from each other by a minimum distance, and an extended position, wherein the second walls 102, 122, 142 of adjacent covering elements 10, 12, 14 are spaced from each other by a maximum distance. The flaps 104, 124, 144 may be flattened between adjacent covering elements 10, 12, 14 when the device 1 is in the contracted position and can be pulled (for example, away from the second wall to which they are connected) when the device 1 is in the extended position. The first walls 100, 120, 140 may be substantially completely superposed on each other when the device 1 is in the contracted position and may be substantially alongside each other when the device 1 is in the extended position. It should be noted that, even in the extended position, there are no slits between the first walls 100, 120, 140. The first walls 100, 120, 140 form a continuous plane in any position. More generally speaking, it should be noted that when the vehicle approaches a curved trajectory, that is to say, a bend, the device 1 may contract by different widths between the two ends along x, in the form of a fan. In short, the innermost part of the curve is more contracted, whilst the outermost part less contracted.

The first walls 100, 120, 140 also form a continuous inclined plane when the vehicle approaches slopes (upwards/downwards).

As illustrated in the drawings, the first wall 100, 120, 140 of each covering element 10, 12, 14 may have a shape at least partly rounded. Advantageously, this allows a facilitated sliding of the first walls 100, 120, 140 during the contraction and/or extension of the device 1. The first walls 100, 120, 140 may therefore form a substantially continuous plane. Advantageously, this makes it possible to prevent objects from inserting between slits and at the same time allowing the device 1 to be extended and contracted.

According to one aspect, as shown in Figures 5 and 6, the end covering elements 12, 14 may comprise at least one flap 124, 144 coupled to a flap 104 of a central covering element 10 (alternatively, they may comprise the same number of flaps as the central covering elements 10 and only some flaps, for example half, may be fixed to flaps of an adjacent covering element 10). The central covering elements 10 may comprise at least a first flap 104 and at least a second flap 104 coupled, respectively, to a flap 104 of a first adjacent covering element, for example preceding, and to a flap 104 of a second adjacent covering member, for example successive. According to one aspect, the covering elements 10, 12, 14 may comprise along the second wall 102, 122, 142 a plurality of flaps 104, 124, 144, for example six flaps in each central covering element 10 and three or six flaps in each end covering element 12, 14.

In the case of end covering elements, the plurality of flaps 124, 144 may be configured to be all coupled to a respective adjacent central covering element 10. In the case of the central covering elements 10, the flaps 104 may be configured to be coupled, alternatively, to the flaps 104 of the preceding covering element and to the flaps 104 of the subsequent adjacent covering element. In other words, the flaps may project, in an alternating fashion, towards the previous covering element and towards the next covering element.

Advantageously, a number of flaps of the covering elements is directly proportional to a weight of the articles which the protective device is able to support.

The flaps 104, 124, 144 may be positioned at predetermined distances from each other.

According to one aspect, each covering element 10, 12, 14 extends longitudinally along a first direction X and the flaps 104, 124, 144 of the covering elements 10, 12, 14 extend from the second wall 102, 122, 142 in a second direction Y, at right angles to the first direction X. For example, the second direction Y may be parallel to the direction of travel of the articulated vehicle and/or may coincide with a connecting line between the first carriage 2 and the second carriage 3.

Moreover, the relative movement of the covering elements 10, 12, 14 may occur relative to each other along the second direction Y.

As mentioned above, the flaps 104, 124, 144 may project along the second direction Y towards the adjacent covering element with which they couple, for example before and/or after.

For example, the protective device 1 may comprise a plurality of fixing elements (not illustrated in the drawings) configured for fixing together flaps 104, 124, 144 of adjacent covering elements 10, 12, 14. The flaps 104, 124, 144 may comprise at least one through hole 106, visible for example in Figure 5, and each fixing element may be configured for inserting inside the through holes 106 of adjacent flaps 104 and fixing them to each other.

According to one aspect, the second wall 102, 122, 142 of the covering element 10, 12, 14 may be at least partly bent at one end, for example a bottom end, opposite an end connected to the first wall 100, 120, 140. For example, the bend may have a value of a few degrees with respect to a vertical direction. Advantageously, the lower bend may impart rigidity to the second wall 102, for example the bend facilitates avoiding a deformation of the wall 102 which could bend. Advantageously, an absence of curvature allows the device 1 to be more compact/contained in the contracted position. In fact, the articles may be rested at the first walls 100, 120, 140, whilst the end opposite to that connected to the first wall may be exposed towards the ground.

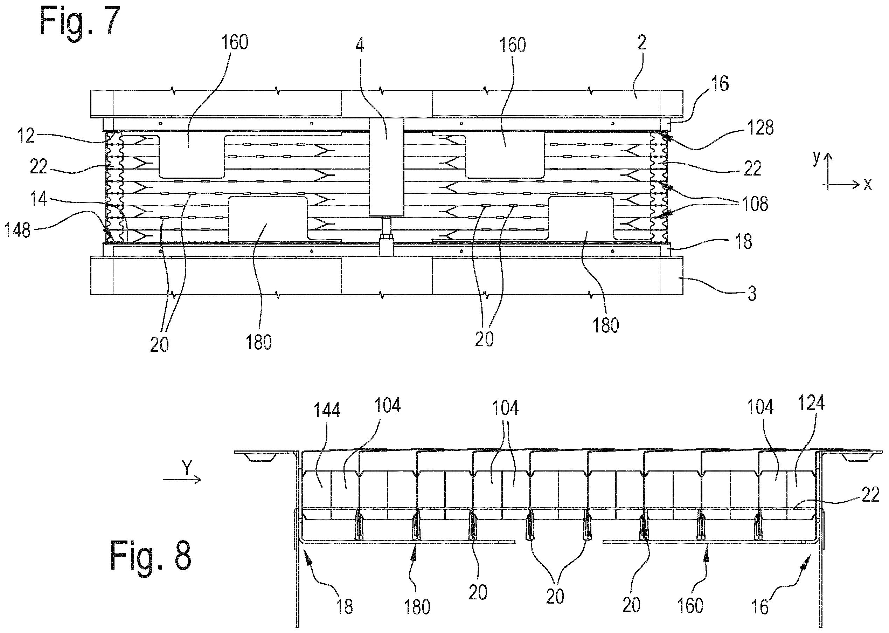

According to one aspect, as illustrated for example in the embodiment of Figures 7 to 9, the protective device 1 may comprise a pair of supporting bodies 16, 18, positioned at the end covering elements 12, 14. For example, a supporting unit 16 may be between the first end covering element 12 and the relative first carriage 2 and the other supporting unit 18 may be between the second end covering element 14 and the relative second carriage 3. The pair of supporting bodies 16, 18 may each comprise one or more brackets 160, 180 which extend towards the plurality of covering elements 10, 12, 14. The brackets 160, 180 may be configured to support a weight of the plurality of covering elements 10, 12, 14 if the covering elements 10, 12, 14 enter into contact with the one or more brackets 160, 180. The brackets may comprise substantially planar bodies and/or which extend towards the central covering elements 10 along the second direction Y.

During a contraction or extension of the protective device 1 along the second direction Y, the bracket 160 coupled to the first carriage 2 may move towards or away from the second carriage 3 and the bracket 180 coupled to the second carriage 3 may move towards or away from the first carriage 2. In the contracted position, for example, the brackets 160, 180 may together support the weight of the covering elements 10, 12, 14. In the extended position, illustrated for example in Figure 7, a part of the covering elements 10, 12 may be supported by one or more brackets 160 and another part of the covering elements 10, 14 may be supported by the one or more brackets 180.

The one or more brackets 160 may be located in positions complementary to the one or more brackets 180 relative to the first direction X. In other words, the brackets 160, 180 do not overlap during the contraction of the device 1. The brackets 160, 180 may form a supporting platform for the covering elements 10, 12, 14 in the contracted position.

According to one aspect, the device 1 may comprise at least one antifriction element 20, for example by way of example by a plurality of runners 20 fixed to the second walls 102, 122, 142 of the covering elements 10, 12, 14 in the drawings. The at least one anti-friction element 20 may be configured to reduce a friction between the brackets 160, 180 and the covering elements 10, 12, 14 during a relative movement of them. The anti-friction element 20 may be positioned, for example, at one or more brackets 160, 180 and/or at the second walls 102, 122, 142 of the covering elements 10, 12, 14. In other words, the anti-friction element 20 may be configured to allow an effective sliding without damaging the individual covering elements 10, 12, 14 on the brackets 160, 180. For example, the anti-friction element 20 may be fixed on a surface of the brackets 160, 180 facing towards the covering elements 10, 12, 14. Alternatively, as illustrated in the non-limiting examples of the drawings, the anti-friction elements 20 may comprise runners configured to slide along the brackets 160, 180 of the supporting bodies 16, 18. It should be noted that the term runner is used to mean any sliding element which facilitates a movement of the covering elements 10, 12, 14 relative to the brackets 160, 180. For example, the runners may comprise a plastic element which allows a protection of the covering elements 10, 12, 14. Each covering element 10, 12, 14, as illustrated in the non-limiting example illustrated in Figures 7 to 9, may comprise a plurality of runners 20, for example positioned at predetermined distances from each other. According to one aspect, the device 1 may comprise at least one limiting belt 22, for example formed by a flexible fabric and/or which can be positioned at lateral ends of the device 1. The second walls 102, 122, 142 of the covering elements 10, 12, 14 may comprise at least one through hole 108, 128, 148 wherein the limiting belt 22 can be inserted, the through holes 108, 128, 148 can be positioned at lateral ends (relative to the first direction X) of the second walls 102, 122, 142. The limiting belt 22 is configured to be inserted into the through holes 108, 128, 148 of the covering elements 10, 12, 14 and to limit a movement of the plurality of covering elements 10, 12, 14.

For example, the through hole 108 may have the shape of a vertical slit and the limiting belt 22 may be inserted in a vertical position (orthogonal to a plane XY) and rotated, about an axis parallel to the second direction Y, up to a horizontal position (parallel to the plane XY).

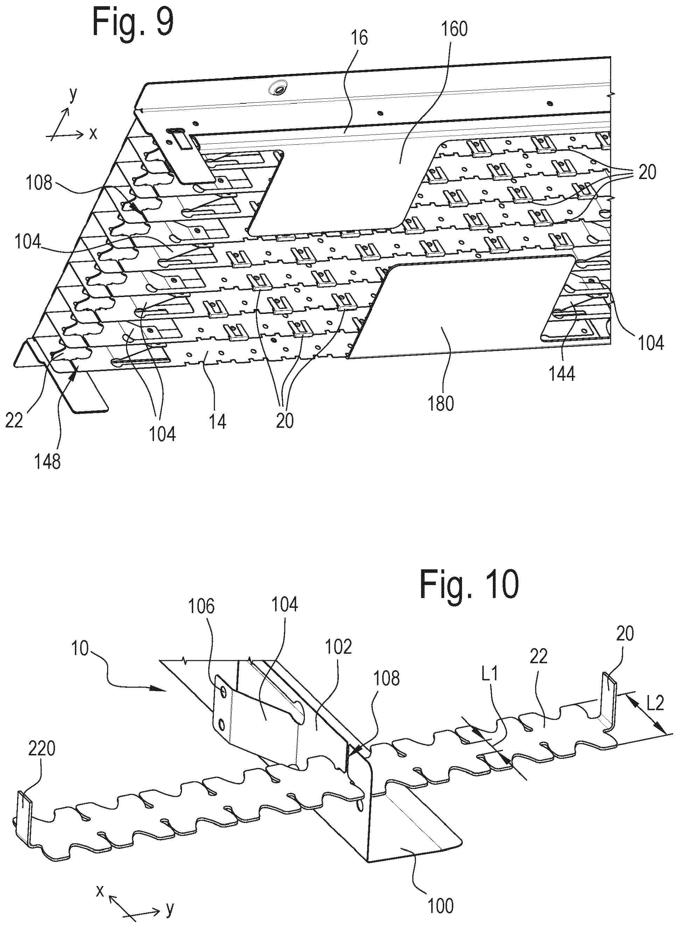

Figure 10 shows an example of a coupling between a covering element 10 and the limiting belt 22. For ease of understanding, however, a single covering element 10 is illustrated, although the other covering elements 10, 12, 14 are coupled to each other in the same way.

According to one aspect, the limiting belt 22 may be formed by alternate portions having a first width L1 and a second width L2, greater than the first width L1, such that the portions with the first width L1 can be positioned at the through holes 108, 128, 148 of the covering elements 10, 12, 14 and the portions with the second width L2 can be positioned between adjacent covering elements 10, 12, 14.

The limiting belt 22 may be folded during a contraction of the device 1 and unfolded during an extension of the device 1.

The limiting belt 22 may comprise ends 220 configured to be coupled to the carriages 2, 3 and/or to the supporting units 16, 18.

One or more embodiments can refer to an articulated vehicle, comprising the first carriage 2, the second carriage 3 and a device 1 for protecting the space between the first and second carriages 2, 3 according to one or more embodiments, wherein the first end covering element 12 of the plurality of covering elements 10, 12, 14 is configured for coupling, for example in a fixed and integral manner, with the first carriage 2 and the second end covering element 14 of the plurality of covering elements 10, 12, 14 is configured for coupling, for example in a fixed and integral manner, with the second carriage 3.

## Claims

1. A device (1) for protecting the space between carriages (2, 3) of an articulated vehicle, comprising a plurality of covering elements (10, 12, 14) each having a first wall (100, 120, 140) and a second wall (102, 122, 142), wherein said first walls (100, 120, 140) are superposed on each other to form a sloping cover, the plurality of covering elements (10, 12, 14) comprise a first end covering element (12) and a second end covering element (14) connected to the carriages (2, 3) of the articulated vehicle and wherein the second wall (102, 122, 142) of each of said covering elements (10, 12, 14) comprises at least one flap (104, 124, 144) configured for a coupling with a corresponding flap (104, 124, 144) of a second wall (102, 122, 142) of an adjacent covering element (10, 12, 14).

2. The protective device (1) according to claim 1, wherein said at least one flap (104, 124, 144) is made from the second wall (102, 122, 142).

3. The protective device (1) according to claim 1 or 2, wherein the plurality of covering elements (10, 12, 14) comprises central covering elements (10), each having at least a first flap (104) and at least a second flap (104) coupled respectively to a flap (104, 124, 144) of a first adjacent covering element (10, 12, 14) and to a flap (104, 124, 144) of a second adjacent covering element (10, 12, 14).

4. The protective device (1) according to any one of claims 1 to 3, wherein each covering element (10, 12, 14) extends longitudinally along a first direction (X) and the at least one flap (104, 124, 144) extends from the second wall (102, 122, 142) in a second direction (Y) at right angles to the first direction (X).

5. The protective device (1) according to any one of the preceding claims, wherein each covering element (10, 12, 14) comprises, along the second wall (102, 122, 142), a plurality of flaps (104, 124, 144) for the coupling with at least one adjacent covering element (10, 12, 14), the flaps (104, 124, 144) being preferably positioned at predetermined distances from each other.

6. The protective device (1) according to any one of the preceding claims, comprising a plurality of fixing elements and wherein the flaps (104, 124, 144) comprise at least one through hole (106), each fixing element being configured for inserting inside through holes (106) of adjacent flaps (104, 124, 144) and fixing them together.

7. The protective device (1) according to any one of the preceding claims, wherein the second wall (102, 122, 142) is at least partly folded at an end opposite an end connected to the first wall (100, 120, 140).

8. The protective device (1) according to any one of claims 1 to 6, comprising a pair of supporting bodies (16, 18), positioned at the end covering elements (12, 14), the pair of supporting bodies (16, 18) each comprising at least one bracket (160, 180) projecting towards the plurality of covering elements (10, 12, 14) and configured for supporting a weight of the plurality of covering elements (10, 12, 14) if the covering elements (10, 12, 14) enter into contact with the brackets (160, 180).

9. The protective device (1) according to claim 8, comprising at least one anti-friction element (20) configured to reduce a friction between the brackets (160, 180) and the covering elements (10, 12, 14) during a relative movement of them, said at least one anti-friction element (20) being fixed to the second walls (102, 122, 142) of the covering elements (10, 12, 14) and/or to the brackets (160, 180).

10. The protective device (1) according to claim 9, wherein the at least one antifriction element (20) preferably comprises a plurality of runners fixed to the second walls (102, 122, 142) of the covering elements (10, 12, 14).

11. The protective device (1) according to any one of the preceding claims, wherein the first wall (100, 120, 140) of each covering element (10, 12, 14) has an at least partly rounded shape.

12. The protective device (1) according to any one of the preceding claims, wherein the second walls (102, 122, 142) of the covering elements (10, 12, 14) comprise at least one through hole (108, 128, 148) and wherein the device (1) comprises at least one limiting belt (22) configured to be inserted inside the through holes (108, 128, 148) of the covering elements (10, 12, 14) and to limit a movement of the plurality of covering elements (10, 12, 14), the limiting belt (22) being formed by alternated portions having a first width (L1) and a second width (L2), greater than the first width (L1), such that the portions with a first width (L1) can be positioned at through holes (108, 128, 148) of the covering elements (10, 12, 14) and the portions with the second width (L2) can be positioned between adjacent covering elements (10, 12, 14).

13. The protective device (1) according to any one of the preceding claims, wherein the covering elements (10, 12, 14) comprise metal plates and/or are substantially L-shaped.

14. An articulated vehicle, comprising a first carriage (2), a second carriage (3) and a device (1) for protecting the space between the first carriage (2) and the second carriage (3) according to any one of the preceding claims, wherein the first end covering element (12) of the plurality of covering elements (10, 12, 14) is configured for coupling with the first carriage (2) and the second end covering element (14) of the plurality of covering elements (10, 12, 14) is configured for coupling with the second carriage (3).
